# FASCICULE DE BREVET EUROPEEN

(11) **EP 4 502 835 B1**
(45) Date de publication et mention de la délivrance du brevet: **19.11.2025**
(21) Numéro de dépôt: 24190791.4
(22) Date de dépôt: 25.07.2024
(51) Int. Cl.: G06F 21/32, G06F 21/62, G07C 9/37

(54) **PROCÉDÉ MIS EN OEUVRE PAR UNE UNITÉ DE TRAITEMENT AYANT ACCÈS À UNE BASE DE DONNÉES BIOMÉTRIQUE**
DURCH EINE VERARBEITUNGSEINHEIT AUSGEFÜHRTES VERFAHREN MIT ZUGRIFF AUF EINE BIOMETRISCHE DATENBANK
METHOD IMPLEMENTED BY A PROCESSING UNIT HAVING ACCESS TO A BIOMETRIC DATABASE

(30) Priorité: 03.08.2023 FR 2308427
(43) Date de publication de la demande: 05.02.2025
(73) Titulaire: IDEMIA Public Security France, 92400 Courbevoie (FR)
(72) Inventeur: BOUATOU, Vincent, 92400 Courbevoie (FR); CHABANNE, Hervé, 92400 COURBEVOIE (FR)
(74) Mandataire: IPS

(56) Documents cités:
- EP-A1- 3 255 614
- CN-A- 109 035 519
- US-A1- 2011 314 285

## Description

### DOMAINE DE L'INVENTION

La présente invention concerne un procédé mis en œuvre par une unité de traitement ayant accès à une base de données biométrique.

### ETAT DE LA TECHNIQUE

Pour sécuriser l'embarquement de passagers à bord d'un avion, une solution envisagée est de constituer une base de données des passagers avant l'embarquement. Une telle base de données est par exemple réalisée à partir de données biométriques. L'identité des passagers peut être contrôlée avant embarquement en interrogeant une telle base de données.

Une telle interrogation consiste généralement à transmettre une requête demandant si une donnée biométrique est référencée dans la base de données. La requête est traitée par une unité de traitement disposant d'un accès au contenu de la base de données. En réponse à la requête, l'unité génère une réponse qui indique si oui ou non la donnée biométrique est référencée ou non dans la base de données.

Toutefois, un attaquant pourrait tenter de deviner si un individu est un passager ou non d'un vol, en soumettant à l'unité de traitement une donnée biométrique de l'individu et en générant une requête dans le format attendu par l'unité de traitement. En multipliant des requêtes sur un grand nombre de données biométriques se rapportant à des individus différents, et en analysant le contenu des réponses fournies par l'unité de traitement, l'attaquant pourrait même arriver à la conclusion qu'un individu va embarquer sur un vol donné.

EP3255614A1 décrit un procédé de vérification d'un droit d'accès d'un individu comprenant la mise en oeuvre, avant que l'individu ne se présente en un point de contrôle, des étapes suivantes:
- acquisition, par un dispositif client, d'une donnée biométrique sur l'individu, et transmission de ladite donnée à un serveur de calcul distant, - mise en oeuvre, par le serveur de calcul distant, d'un protocole de calcul vérifiable publiquement et à divulgation nulle de connaissance, comprenant : le calcul d'une fonction comprenant un calcul de distance entre la donnée biométrique et chacune d'une pluralité de données de référence, la comparaison de chaque distance à un seuil prédéterminé, et la génération d'un résultat indiquant si au moins l'une des distances calculées est inférieure audit seuil, la génération, à partir de ladite fonction, d'une preuve d'exactitude du calcul de la fonction, - transmission, par le serveur de calcul distant, du résultat du calcul de la fonction et de la preuve d'exactitude du calcul au dispositif client, et le procédé comprend la mise en oeuvre des étapes suivantes, lorsque l'individu se présente au point de contrôle: - transmission, par le dispositif client, de la donnée acquise sur l'individu, du résultat du calcul et de la preuve à une unité de traitement d'une autorité de contrôle, - vérification, par l'unité de traitement, de l'exactitude du résultat, à partir de la preuve.

### EXPOSE DE L'INVENTION

Un but de l'invention est de rendre une base de données biométrique plus robustes à des attaques par requêtes, de telle sorte qu'il soit plus difficile pour un attaquant de déterminer si un individu est référencé ou non dans une telle base de données.

Ce but est atteint par un procédé mis en œuvre par une unité de traitement, comprenant des étapes de :
- réception d'une première donnée biométrique et d'une requête demandant si la première donnée biométrique est référencée dans une base de données, la base de données comprenant des données biométriques de référence associées à des ensemble d'aléas respectifs qui sont disjoints, chaque ensemble d'aléas comprenant une pluralité d'aléas,
- recherche d'une deuxième donnée biométrique qui correspond à la première donnée biométrique parmi les données biométriques de référence,
- génération d'une réponse à la requête, la réponse contenant un aléa satisfaisant les conditions suivantes :
   - lorsque la deuxième donnée biométrique est trouvée lors de la recherche, l'aléa est un élément de l'ensemble d'aléas associé à la deuxième donnée biométrique,
   - lorsque la deuxième donnée biométrique n'est pas trouvée lors de la recherche, l'aléa n'appartient à aucun des ensembles d'aléas associés aux données biométriques de référence,
   - l'aléa est différent d'un précédent aléa contenu dans une précédente réponse à une précédente requête demandant si une précédente donnée biométrique est référencée dans la base de données biométriques, aussi bien lorsque le précédent aléa est un élément d'un des ensembles d'aléas que lorsque le précédent aléa n'appartient à aucun des ensembles d'aléas.

Le procédé proposé peut également comprendre les caractéristiques optionnelles suivantes, prises seules ou en combinaison à chaque fois que cela est possible techniquement.

De préférence, le procédé comprend les étapes suivantes mises en oeuvre pour toute donnée biométrique de référence, lors d'un enrôlement de la donnée biométrique de référence dans la base de données :
- génération d'une donnée représentative de l'ensemble d'aléas associé à la donnée biométrique de référence,
- mémorisation, dans la base de données, de la donnée générée.

De préférence, pour toute donnée biométrique de référence, la donnée représentative de l'ensemble d'aléas associé à la donnée biométrique de référence est constituée par l'ensemble d'aléas associé à la donnée biométrique de référence.

De préférence, le procédé comprend l'étape suivante réalisée pour toute donnée biométrique de référence à l'issue de l'enrôlement de la donnée biométrique de référence:
- commander la transmission à un système de contrôle de la donnée représentative de l'ensemble d'aléas associé à la donnée biométrique de référence.

De préférence, lorsque la deuxième donnée biométrique n'est pas trouvée lors de la recherche, l'aléa inclus dans la réponse est généré par l'unité de traitement après l'étape de recherche.

Il est également proposé un procédé de contrôle d'identité mis en œuvre par un système de contrôle communiquant avec une unité de traitement configurée pour mettre en œuvre le procédé susmentionné, le procédé de contrôle d'identité comprenant les étapes suivantes :
- pour toute donnée biométrique de référence, réception d'une donnée représentative de l'ensemble d'aléas associé à la donnée biométrique de référence, à l'issue d'un enrôlement de la donnée biométrique de référence dans la base de données, et mémorisation de la donnée représentative de l'ensemble d'aléas associé à la donnée biométrique de référence dans une mémoire,
- transmission à l'unité de traitement de la requête demandant si la première donnée biométrique est référencée dans une base de données,
- réception de la réponse à la requête,
- vérification de l'existence dans la mémoire d'une donnée représentative d'un ensemble d'aléas qui comprend l'aléa contenu dans la réponse.

De préférence: les données biométriques de référence se rapportent à des individus de référence disposant d'un droit d'accès à une zone sécurisée, etla première donnée biométrique se rapporte à un individu souhaitant accéder à la zone sécurisée.

Il est en outre proposé un produit programme d'ordinateur comprenant des instructions de code de programme pour l'exécution des étapes de l'un quelconque des procédés susmentionnés, lorsque ce programme est exécuté par une unité traitement.

Il est encore proposé un mémoire lisible par ordinateur stockant des instructions exécutables par l'ordinateur pour l'exécution des étapes de l'un quelconque de ces procédés.

Il est également proposé un système de gestion de données biométriques comprenant :
- Une interface de communication configurée pour :
   - recevoir une première donnée biométrique, et une requête demandant si la donnée biométrique est référencée dans une base de données, la base de données comprenant des données biométriques de référence associées à des ensembles d'aléas respectifs qui sont disjoints, chaque ensemble d'aléas comprenant une pluralité d'aléas,
   - émettre une réponse à la requête,
- une unité de traitement configurée pour :
   - rechercher une deuxième donnée biométrique qui correspond à la première donnée biométrique parmi les données biométriques de référence,
   - générer la réponse à la requête, la réponse contenant un aléa, dans lequel l'aléa satisfait les conditions suivantes :
      - lorsque la deuxième donnée biométrique est trouvée lors de la recherche, l'aléa est un élément de l'ensemble d'aléas associé à la deuxième donnée biométrique,
      - lorsque la deuxième donnée biométrique n'est pas trouvée lors de la recherche, l'aléa n'appartient à aucun des ensembles d'aléas associés aux données biométriques de référence,
      - l'aléa est différent d'un précédent aléa contenu dans une précédente réponse à une précédente requête demandant si une précédente donnée biométrique est référencée dans la base de données, aussi bien lorsque le précédent aléa fait partie d'un des ensembles d'aléas que lorsque le précédent aléa n'appartient à aucun des ensembles d'aléas associés aux données biométriques de référence.

Il est encore proposé un système comprenant :
- Un système de gestion conforme à la définition qui précède, et
- Un dispositif de contrôle comprenant :
   - Une interface de communication configurée pour :
      - pour toute donnée biométrique de référence contenue dans la base de données, recevoir une donnée représentative de l'ensemble d'aléas associé à la donnée biométrique de référence, à l'issue d'un enrôlement de la donnée biométrique de référence dans la base de données,
      - envoyer la requête au système de gestion,
      - recevoir la réponse à la requête,
   - Une mémoire pour mémoriser les données représentatives reçues par l'interface de communication,
   - Une unité de traitement configurée pour vérifier l'existence dans la mémoire d'une donnée représentative d'un ensemble d'aléas qui comprend l'aléa contenu dans la réponse.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 illustre de façon schématique un système selon un mode de réalisation de l'invention.
La figure 2 est un organigramme d'étapes d'un procédé selon un mode de réalisation de l'invention.

Sur l'ensemble des figures, les éléments similaires portent des références identiques.

### DESCRIPTION DETAILLEE DE L'INVENTION

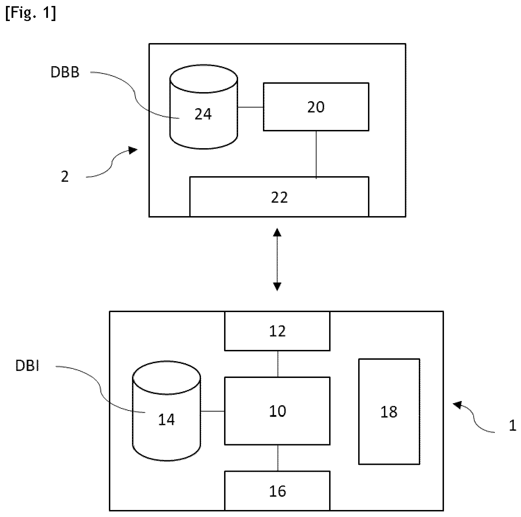

En référence à la **figure 1****,** un système comprend un dispositif de contrôle 1 et un système de gestion de données biométriques 2.

Le dispositif de contrôle 1 a pour fonction, entre autres, de contrôler l'identité d'individus.

Le dispositif de contrôle 1 comprend une unité de traitement de données 10, une interface de communication 12 pour communiquer avec le système de gestion 2, et une mémoire 14.

L'unité de traitement de données 10 est configurée pour mettre en oeuvre certaines étapes d'un procédé de contrôle d'identité qui sera décrit plus loin. Par exemple, l'unité de traitement de données 10 comprend au moins un processeur configuré pour exécuter les instructions de code d'un programme de manière à mettre en oeuvre ces étapes.

L'interface de communication 12 est par exemple de type radio sans fil, et utilise un protocole de communication quelconque (Wi-Fi, Bluetooth, etc.). En variante, l'interface de communication est filaire (par exemple Ethernet).

La mémoire 14 est adapté pour mémoriser des données. Elle est de type quelconque (Flash, EEPROM, disque dur, SSD, etc.).

La mémoire 14 comprend une base de données d'identité DBI. Comme on le verra par la suite, cette base de données d'identité a vocation à contenir des informations relatives à l'identité d'individus en association avec des ensembles d'aléas.

Le dispositif de contrôle 1 comprend par ailleurs une unité d'acquisition de données biométrique 16. L'unité d'acquisition 16 peut comprendre une caméra configurée pour acquérir des images montrant le visage d'un individu, et pour extraire des données biométriques de telles images. Alternativement, l'unité d'acquisition 16 comprend un capteur d'empreinte digitale et/ou un capteur d'iris.

Dans un mode de réalisation, le dispositif de contrôle 1 comprend en outre un portique 18 pouvant être fermé pour empêcher un individu d'accéder à une zone sécurisée, et être ouvert pour autoriser un tel accès. L'unité de traitement de données 10 est en particulier configurée pour commander l'ouverture et la fermeture du portique 18.

Par exemple, le dispositif de contrôle 1 se trouve dans un aéroport, et la zone sécurisée est une zone d'embarquement ; dans cette application particulière, les individus souhaitant accéder à la zone d'embarquement sont les passagers d'un vol, dont l'identité est à contrôler avant d'embarquer.

Par ailleurs, le système de gestion 2 comprend une unité de traitement de requêtes 20, une interface de communication 22 pour communiquer avec le dispositif de contrôle 1, et une mémoire 24.

Les informations fournies ci-dessus à propos de l'unité de traitement de données 10 et de l'interface de communication 12 sont applicables également à l'unité de traitement 20 et à l'interface de communication 22.

La mémoire 24 stocke une base de données biométriques DBB. La base de données DBB contient des données biométriques de référence se rapportant à des individus précédemment enrôlés. De préférence, les données biométriques de référence ne sont pas en clair dans la base de données, mais sont au contraire protégées en confidentialité, c'est-à-dire sont une forme chiffrée, grâce à un procédé de chiffrement connu de l'état de la technique.

Aucune information sur l'identité des individus enrôlés n'est stockée dans la base de données biométrique DBB (nom, prénom, date de naissance, lieu de naissance, adresse, etc.), les données biométriques de référence mises à part.

Chaque donnée biométrique de référence est associée, dans la base de données DBB, avec un ensemble d'aléas propre à la donnée biométrique de référence. Chaque ensemble d'aléas comprend une pluralité d'aléas. Dans la présente divulgation, un aléa désigne une donnée générée aléatoirement ou dépendant d'une donnée générée aléatoirement.

Les ensembles d'aléas sont tous disjoints. Par disjoints, on veut dire que les ensembles d'aléas n'ont aucun élément (aléa) en commun. Autrement dit, un aléa constituant un élément d'un ensemble d'aléa donné n'appartient à aucun des autres ensembles d'aléas.

L'association susmentionnée entre données biométriques de référence et ensembles d'aléas est à prendre au sens large, et n'implique pas forcément que les ensembles d'aléas soient stockés tels quels dans la base de données biométrique DBB.

En effet, la base de données DBB peut contenir des données représentatives d'ensembles d'aléas, une donnée représentative d'un ensemble d'aléas peut certes être constituée par les aléas de l'ensemble en question, mais pas forcément. Chaque donnée biométrique de référence est ainsi mémorisée, dans la base de données DBB, en association avec une donnée représentative d'un ensemble d'aléas propre à la donnée biométrique.

En définitive, si la base de donnée DBB contient N données biométriques de référence, alors elle contient également des données représentatives de N ensembles d'aléas respectivement associés aux données biométriques de référence.

L'unité de traitement de requêtes 20 est configurée pour traiter des requêtes émanant d'un émetteur, en particulier du dispositif de contrôle 1, ces requêtes visant à savoir si une donnée biométrique est référencée ou non dans la base de données biométrique DBB. L'unité de traitement 20 est configurée pour répondre à une requête de ce type par une réponse. De préférence, cette réponse est elle-même protégée en confidentialité. En d'autres termes, la réponse est de préférence un chiffré, qu'il faut encore déchiffrer pour savoir si la donnée biométrique fournie avec la requête initiale était bien référencée dans la base de données biométriques.

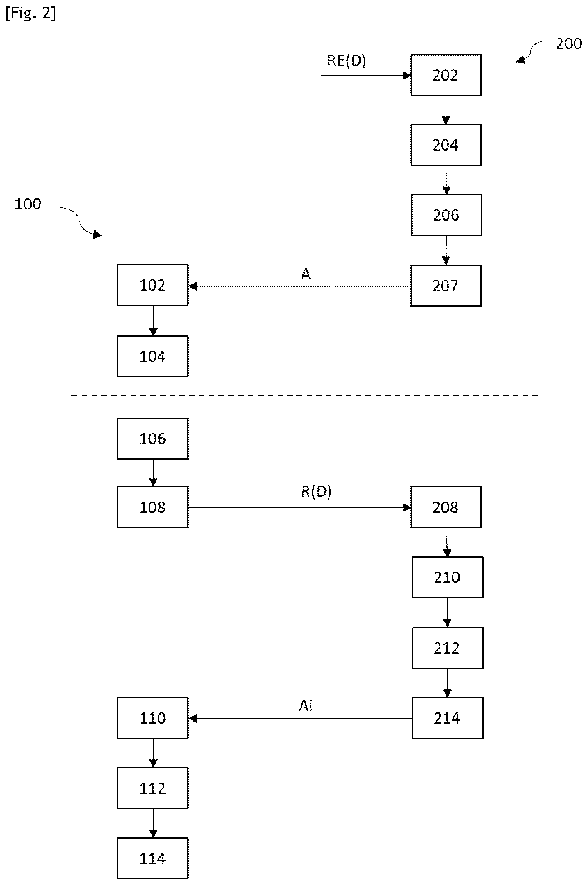

En référence à la figure 2, un procédé utilisant le système décrit précédemment comprend deux phases : une phase d'enrôlement et une phase de contrôle.

Par convention, les étapes mises en œuvre par le dispositif de contrôle 1 sont collectivement appelées procédé 100, et les étapes mise en œuvre par le système de gestion sont collectivement appelées procédé 200.

Au cours de la phase d'enrôlement, des individus acquièrent un droit.

Dans ce qui suit, on détaillera une application dans laquelle ce droit est un droit d'accéder à la zone sécurisée décrite précédemment. On se place donc dans l'application où le dispositif de contrôle 1 a pour fonction de conditionner un accès physique à la zone sécurisée pour des individus. A des fins d'illustrations, on supposera que cette zone sécurisée est une zone d'embarquement dans un aéroport, et que l'utilisateur souhaite acquérir un billet pour un vol.

On suppose dans un premier temps que la base de données biométrique DBB est vide.

Un utilisateur fournit au dispositif de contrôle 1 des informations sur son identité (nom, prénom, etc.), et fournit au dispositif de gestion 2 une donnée biométrique D qui se rapporte à cet utilisateur au cours de la phase d'enrôlement. Par exemple, l'utilisateur transmet ces données via un terminal qu'il possède, par exemple un smartphone, une tablette ou un ordinateur personnel. La donnée biométrique D est par exemple acquise par un capteur du terminal de l'utilisateur.

Dans une étape 202, le dispositif de gestion 2 reçoit la donnée biométrique D se rapportant à l'individu, et une requête d'enrôlement RE de la donnée biométrique D. Cette requête d'enrôlement RE peut être relayée par le dispositif de contrôle 1 ou non.

L'unité de traitement de requêtes 20 traite la requête d'enrôlement RE comme suit.

Dans une étape 204, l'unité de traitement 20 génère une donnée A représentative d'un ensemble d'aléas. L'ensemble d'aléas comprend une pluralité d'aléas de valeurs différentes {A1, ..., Ai, ..., AM}.

Dans un premier mode de réalisation de l'étape 204, la donnée A représentative de l'ensemble d'aléas peut être l'ensemble d'aléas lui-même, c'est-à-dire les M aléas A1, ..., Ai, ..., AM directement.

Dans un deuxième mode de réalisation de l'étape 204, la donnée A représentative de l'ensemble d'aléas comprend au moins une donnée à partir de laquelle l'ensemble d'aléas peut être reconstitué par un traitement de reconstruction connu de l'unité de traitement 20.

Dans une étape 206, l'unité de traitement 20 commande l'ajout, dans la base de données biométrique DBB, de la donnée biométrique D reçue en association avec la donnée A représentative de l'ensemble d'aléas {A1, ..., Ai, ..., AM} générée à l'étape 204. La donnée biométrique D reçue devient alors une donnée biométrique de référence, enrôlée.

Dans une étape 207, le système de gestion 2 envoie au dispositif de contrôle 1 la donnée A représentative de l'ensemble d'aléas associée à la donnée biométrique D, en réponse à la requête d'enrôlement de la donnée biométrique D.

Ainsi, dans le premier mode de réalisation, le système de gestion transmet en guise de donnée A l'ensemble formé par les M aléas A1, ..., Ai, ..., AM générés pour la donnée biométrique D.

Dans le deuxième mode de réalisation, les M aléas ne sont pas envoyés au dispositif de contrôle 1, mais le dispositif de contrôle 1 est capable de reconstituer au besoin l'ensemble d'aléas {A1, ..., Ai, ..., AM} en utilisant le même traitement de reconstruction que celui utilisé par le système de gestion 2. Le deuxième mode de réalisation a pour avantage de nécessiter moins de ressource de stockage et de bande passante que le premier mode de réalisation. En effet, le volume de la donnée représentative de l'ensemble d'aléas est moindre.

Dans une étape 102, le dispositif de contrôle 1 reçoit la donnée A.

Dans une étape 104, Le dispositif de contrôle 1 mémorise dans la base de données d'identité DBI la donnée A représentative de l'ensemble d'aléas, en association avec des informations relatives à l'identité de l'individu auquel la donnée biométrique D se rapporte, que l'individu a préalablement fournies (nom, prénom, adresse, etc.).

Les étapes qui précèdent sont répétées pour chaque nouvel utilisateur souhaitant être enrôlé.

A chaque nouvelle mise en œuvre de l'étape de génération 204, une nouvelle donnée A représentative d'un nouvel ensemble d'aléas est générée. Tout nouvel ensemble d'aléas vérifie les contraintes de disjonction discutées précédemment, c'est-à-dire que tous les aléas qu'il contient n'apparaissent dans aucun ensemble d'aléas représenté par une donnée A antérieurement générée, lors d'une précédente mise en œuvre de l'étape 204.

A l'issue de la phase d'enrôlement, N individus ont été enrôlés. En conséquence, N données biométriques de référence se rapportant respectivement à ces individus sont présentes dans la base de données biométrique DBB, en association avec N données A représentatives de N ensembles d'aléas qui sont tous disjoints. Par ailleurs, les N données A représentatives de N ensembles d'aléas sont également stockées dans l'autre base de données DBI en association avec des informations relatives à l'identité des individus.

Au cours d'une phase de contrôle ultérieure à la phase d'enrôlement, des individus se prévalent du droit susmentionné.

Pour cela, l'un de ces individus se présente à proximité du dispositif de contrôle 1.

Dans une étape 106, le dispositif de contrôle 1 acquiert une donnée biométrique D de l'individu, que l'on appelle par convention « première donnée biométrique ». Cette étape peut être réalisée à l'aide de l'unité d'acquisition biométrique du dispositif de contrôle 1. En variante, si l'individu de référence est en possession d'un terminal, ce terminal peut acquérir la première donnée biométrique D et ensuite la transmettre au dispositif de contrôle 1.

Dans une étape 108, le dispositif envoie au système de gestion 2 la première donnée biométrique D et une requête R demandant si la première donnée biométrique D est référencée dans la base de données biométrique DBB.

L'unité de traitement de requêtes 20 reçoit la requête R dans une étape 208, et applique le traitement qui suit à cette requête R.

Dans une étape 210, l'unité de traitement de requêtes 20 recherche, dans la base de données biométrique DBB, une donnée biométrique de référence qui correspond à la première donnée biométrique visée par la requête R. Par convention, on appelle « deuxième donnée biométrique » une donnée biométrique de référence D' qui correspond à la première donnée biométrique.

L'étape 210 est connue de l'état de la technique. Cette étape 210 peut comprend le calcul d'une métrique représentative d'une distance entre la donnée biométrique D et une donnée biométrique de référence, et la comparaison de cette distance avec un seuil prédéfini. Si la distance est inférieure au seuil, alors il est considéré que les deux données biométriques comparées correspondent. Dans le cas contraire, il est considéré que les deux données biométriques ne correspondent pas, et les étapes de calcul et de comparaison sont répétées pour une autre donnée biométrique de référence contenue dans la base de données biométrique DBB.

La recherche 210 aboutit à deux résultats possibles : soit la deuxième donnée biométrique D' est trouvée, soit la deuxième donnée biométrique D' n'est pas trouvée (c'est-à-dire qu'aucune donné biométrique de référence contenue dans la base de données biométrique DBB ne correspond à la première donnée biométrique D).

Dans une étape 212, l'unité de traitement 20 génère une réponse à la requête, la réponse comprenant un aléa. Cette étape 212 est réalisée quel que soit le résultat de la recherche 210.

L'aléa inclus dans la réponse générée à l'étape 212 satisfait les conditions suivantes :
a) Lorsque la deuxième donnée biométrique D' est trouvée lors de la recherche, l'aléa est un élément de l'ensemble d'aléas associé à la deuxième donnée biométrique.
b) Lorsque la deuxième donnée biométrique D' n'est pas trouvée lors de la recherche, l'aléa n'appartient à aucun des ensembles d'aléas.
c) L'aléa est différent d'un précédent aléa contenu dans une précédente réponse à une précédente requête demandant si une précédente donnée biométrique est référencée dans la base de données biométriques de référence, aussi bien lorsque le précédent aléa est un élément d'un des ensembles d'aléas que lorsque le précédent aléa n'appartient à aucun des ensembles d'aléas.

Dans le cas a), l'unité de traitement 20 sélectionne simplement l'un des aléas de l'ensemble représenté par la donnée A associée à la donnée D', cette donnée A ayant été générée lors de la phase d'enrôlement.

De préférence, dans le cas b), l'aléa est généré par l'unité de traitement 20 suite à l'étape de recherche 210.

Quel que soit le résultat de la recherche 210 (cas a) ou cas b)), l'aléa inclus dans la réponse est toujours codé sur le même nombre de bits, de préférence au moins 16 bits, voire au moins 32 bits. Comme indiqué précédemment, il est aisé d'obtenir un aléa satisfaisant la condition de non-appartenance énoncée dans le cas b) lorsque cet aléa est codé sur un nombre de bits élevé.

Dans une étape 214, le système de gestion 2 transmet la réponse à l'émetteur de la requête, autrement au dispositif de contrôle 1.

Dans une étape 110, le dispositif de contrôle 1 reçoit la réponse contenant l'aléa.

Dans une étape 112, le dispositif de contrôle 1 vérifie si l'aléa contenu dans la réponse est référencé dans la base de données DBI, c'est-à-dire si l'aléa contenu dans la réponse fait partie de l'un des N ensembles d'aléas qui sont représentés par les données A mémorisées dans la base de données DBI.

Dans le premier mode de réalisation discuté précédemment, l'unité de traitement 10 compare simplement l'aléa reçu dans la réponse avec un aléa mémorisé dans la mémoire 14, et répète cette étape jusqu'à trouver un aléa mémorisé dans la base de données DBI qui est égal à l'aléa contenu dans la réponse ou jusqu'à ce que tous les ensembles d'aléas soit parcourus.

Dans le deuxième mode de réalisation, l'unité de traitement 10 applique le traitement de reconstruction pour reconstituer un ensemble d'aléas, avant de comparer l'aléa reçu avec les aléas de l'ensemble reconstitué. Ces étapes sont répétées jusqu'à trouver un aléa mémorisé dans la base de données DBI qui est égal à un aléa reconstitué ou jusqu'à ce que tous les ensembles d'aléas aient été reconstitués et parcourus.

Si, au cours de la vérification 112, le dispositif de contrôle 1 constate que l'aléa reçu dans la réponse est référencé dans la base de données d'identité DBI, alors il est considéré que l'individu auquel se rapporte la première donnée biométrique D dispose bien du droit qu'il souhaite exercer (en l'occurrence, accéder à la zone sécurisée). L'unité de traitement 10 commande alors automatiquement l'ouverture du portique 18, de sorte à permettre à l'individu d'accéder à la zone sécurisée.

Si au cours de la vérification 112 le dispositif de contrôle 1 constate au contraire que l'aléa reçu n'est pas référencé dans la base de données d'identité DBI, alors il y a présomption que l'individu auquel se rapport la première donnée biométrique ne dispose pas du droit qu'il souhaite exercer (en l'occurrence, accéder à la zone sécurisée). L'unité de traitement 10 ne commande alors pas automatiquement l'ouverture du portique 18, empêchant ainsi l'individu d'accéder à la zone sécurisée. Dans ce deuxième cas, un contrôle manuel de l'identité de l'individu peut éventuellement être réalisé à titre complémentaire, en demande à l'utilisateur de fournir une pièce d'identité (carte d'identité, passeport ou autre), et vérifier si la base de données contient des informations d'identité correspondant aux informations consignées dans la pièce d'identité (nom, prénom, etc.).

Les étapes qui précèdent sont répétées à chaque fois qu'un nouvel individu se prévaut du droit susmentionné.

### Tentative d'accès par un attaquant à la base de données

Supposons maintenant qu'un attaquant cherche à obtenir des informations sur le contenu de la base de données biométrique DBB, en interrogeant le système de gestion 2 par des requêtes successives, et en analysant les réponses correspondantes retournées par le système de gestion 2. On suppose que l'attaquant a réussi à obtenir des données biométriques se rapportant à des individus, et connaît le format des requêtes que l'unité de traitement 20 a vocation à traiter.

A l'aide d'un terminal, l'attaquant envoie au système de gestion 2 une donnée biométrique et une requête demandant si la donnée biométrique est référencée dans la base de données, au format attendu par le système de gestion 2, et répète cette étape plusieurs fois, comme lors de l'étape 108 mise en œuvre par le dispositif de contrôle 1.

Le système de gestion 2 traite chaque requête conformément aux étapes 210, 212, 214 décrites précédemment. L'attaquant, émetteur des requêtes, reçoit dont une succession de réponses.

Cette succession de réponse ne fournit à l'attaquant aucune information utile.

Premièrement, chaque réponse que l'attaquant reçoit contient un aléa, aussi bien dans le cas où la donnée biométrique testée par l'attaquant est réellement présente dans la base de données DBB (condition a) que dans le cas contraire (condition b).

Deuxièmement, toutes les réponses que l'attaquant reçoit successivement contiennent, par construction, des aléas différents (condition c). En effet, à chaque nouvelle requête, l'unité de traitement « puise » dans un ensemble d'aléa une valeur d'aléa n'ayant pas déjà été utilisée précédemment et retournée en réponse à une précédente requête. On note que l'aléa peut être puisé dans un ensemble d'aléas ayant été associé à une donnée biométrique de référence (si, par chance, l'attaquant a réussi à mettre la main sur une donnée biométrique se rapportant à un individu enrôlé dans la base de données biométrique DBB) ou non (lorsque la donnée biométrique soumise par l'attaquant se rapport à un individu qui n'est pas référencé dans la base de données biométrique DBI). Du point de vue de l'attaquant, le comportement du système de gestion est similaire dans les deux cas.

Ce principe n'empêche aucunement le dispositif de contrôle 1 de mener à bien ultérieurement la phase contrôle d'identité discuté précédemment (étapes 110, 112, 114). Si d'aventure le système de gestion 2 a été amené à répondre à des requêtes d'un attaquant entre la phase d'enrôlement et la phase de contrôle, le système de gestion 2 va tout de même fournir au dispositif de contrôle 1 un aléa satisfaisant les conditions a), b), c), la seule différence résidant potentiellement dans la valeur de l'aléa retourné.

Par exemple, le dispositif de contrôle 1 va recevoir l'aléa A1 associé à un individu enrôlé en guise de réponse à l'étape 110, dans le cas où aucune attaque intercalaire n'a été réalisée. En revanche, si deux attaques intercalaires sont réalisées avec deux données biométriques qui s'avèrent se rapporter à un individu enrôlé, l'attaquant va recevoir les aléas A1, A2 en guise de réponses, et le dispositif de contrôle 1 recevra à l'étape 110 l'aléa A3 en guise de réponse à une requête se fondant une sur une donnée biométrique du même individu. Bien entendu, cet exemple suppose que l'indice i associé à une donnée biométrique s'incrémente, mais l'intervalle des entiers de longueur M peut être parcouru par d'autres logique (notamment par décrémentation).

Une situation qui peut se produire est celle dans laquelle l'unité de traitement 20 se fait interroger un nombre tellement élevé de fois (par exemple par un attaquant) que l'ensemble d'aléas {A1, ..., Ai, ..., AM} associé à l'une des données biométriques de référence est entièrement « consommé ». Dans ce cas, deux politiques peuvent être mises en œuvre.

Selon une première politique, l'unité de traitement 20 met à nouveau en œuvre les étapes 204, 206, 207, de sorte à transmettre au dispositif de contrôle 1 une nouvelle donnée A' associée à la donnée biométrique concernée (le dispositif de contrôle 1 répète lui aussi les étapes 102, 104).

Selon une deuxième politique, l'unité de traitement 20 retourne un nouvel aléa n'appartenant à aucun des ensembles d'aléas (comme dans le cas b), mais, à la différence de la première politique, l'unité de traitement 20 ne « déclare » pas ce nouvel aléa au dispositif de contrôle 1 via l'étape 207. Dans ce cas, l'individu enrôlé auquel se rapporte à la donnée biométrique de référence en discussion ne sera pas reconnu comme étant enrôlé lors de l'étape 112. C'est pour couvrir une telle situation qu'il est avantageux de réaliser un contrôle manuel de l'identité de l'individu à titre complémentaire, comme indiqué plus haut.

## Revendications

1. Procédé mis en oeuvre par une unité de traitement (20), comprenant des étapes de :
• réception (208) d'une première donnée biométrique et d'une requête demandant si la première donnée biométrique est référencée dans une base de données (DBB), la base de données (DBB) comprenant des données biométriques de référence associées à des ensemble d'aléas respectifs qui sont disjoints, chaque ensemble d'aléas comprenant une pluralité d'aléas,
• recherche (210) d'une deuxième donnée biométrique qui correspond à la première donnée biométrique parmi les données biométriques de référence,
• génération (212) d'une réponse à la requête, la réponse contenant un aléa satisfaisant les conditions suivantes :
• lorsque la deuxième donnée biométrique est trouvée lors de la recherche, l'aléa est un élément de l'ensemble d'aléas associé à la deuxième donnée biométrique,
• lorsque la deuxième donnée biométrique n'est pas trouvée lors de la recherche, l'aléa n'appartient à aucun des ensembles d'aléas associés aux données biométriques de référence,
• l'aléa est différent d'un précédent aléa contenu dans une précédente réponse à une précédente requête demandant si une précédente donnée biométrique est référencée dans la base de données biométriques (DBB), aussi bien lorsque le précédent aléa est un élément d'un des ensembles d'aléas que lorsque le précédent aléa n'appartient à aucun des ensembles d'aléas.

2. Procédé selon la revendication précédente, comprenant les étapes suivantes mises en œuvre pour toute donnée biométrique de référence, lors d'un enrôlement de la donnée biométrique de référence dans la base de données (DBB) :
• génération d'une donnée (A) représentative de l'ensemble d'aléas associé à la donnée biométrique de référence,
• mémorisation, dans la base de données (DBB), de la donnée générée.

3. Procédé selon la revendication 2, dans lequel, pour toute donnée biométrique de référence, la donnée représentative de l'ensemble d'aléas associé à la donnée biométrique de référence est constituée par l'ensemble d'aléas associé à la donnée biométrique de référence.

4. Procédé selon l'une quelconque des revendications 2 et 3, comprenant par ailleurs l'étape suivante réalisée pour toute donnée biométrique de référence à l'issue de l'enrôlement de la donnée biométrique de référence :
• commander la transmission à un système de contrôle (1) de la donnée représentative de l'ensemble d'aléas associé à la donnée biométrique de référence.

5. Procédé selon l'une quelconque des revendications précédentes, dans lequel lorsque la deuxième donnée biométrique n'est pas trouvée lors de la recherche, l'aléa inclus dans la réponse est généré par l'unité de traitement (20) après l'étape de recherche.

6. Procédé de contrôle d'identité mis en œuvre par un système de contrôle (1) communiquant avec une unité de traitement (20) configurée pour mettre en œuvre le procédé selon l'une quelconque des revendications précédentes, le procédé de contrôle d'identité comprenant les étapes suivantes :
• pour toute donnée biométrique de référence, réception d'une donnée représentative de l'ensemble d'aléas associé à la donnée biométrique de référence, à l'issue d'un enrôlement de la donnée biométrique de référence dans la base de données, et mémorisation de la donnée représentative de l'ensemble d'aléas associé à la donnée biométrique de référence dans une mémoire (14),
• transmission à l'unité de traitement (20) de la requête demandant si la première donnée biométrique est référencée dans une base de données (DBB),
• réception de la réponse à la requête,
• vérification de l'existence dans la mémoire d'une donnée représentative d'un ensemble d'aléas qui comprend l'aléa contenu dans la réponse.

7. Procédé de contrôle d'identité selon la revendication précédente, dans lequel :
• les données biométriques de référence se rapportent à des individus de référence disposant d'un droit d'accès à une zone sécurisée,
• la première donnée biométrique se rapporte à un individu souhaitant accéder à la zone sécurisée.

8. Produit programme d'ordinateur comprenant des instructions de code de programme pour l'exécution des étapes du procédé selon l'une des revendications précédentes, lorsque ce programme est exécuté par une unité traitement (20).

9. Mémoire (24) lisible par ordinateur stockant des instructions exécutables par l'ordinateur pour l'exécution des étapes du procédé selon l'une des revendications 1 à 7.

10. Système de gestion (2) de données biométriques comprenant :
• Une interface de communication (22) configurée pour :
• recevoir une première donnée biométrique, et une requête demandant si la donnée biométrique est référencée dans une base de données (DBB), la base de données (DBB) comprenant des données biométriques de référence associées à des ensembles d'aléas respectifs qui sont disjoints, chaque ensemble d'aléas comprenant une pluralité d'aléas,
• émettre une réponse à la requête,
• une unité de traitement (20) configurée pour :
• rechercher une deuxième donnée biométrique qui correspond à la première donnée biométrique parmi les données biométriques de référence,
• générer la réponse à la requête, la réponse contenant un aléa, dans lequel l'aléa satisfait les conditions suivantes :
• lorsque la deuxième donnée biométrique est trouvée lors de la recherche, l'aléa est un élément de l'ensemble d'aléas associé à la deuxième donnée biométrique,
• lorsque la deuxième donnée biométrique n'est pas trouvée lors de la recherche, l'aléa n'appartient à aucun des ensembles d'aléas associés aux données biométriques de référence,
• l'aléa est différent d'un précédent aléa contenu dans une précédente réponse à une précédente requête demandant si une précédente donnée biométrique est référencée dans la base de données (DBB), aussi bien lorsque le précédent aléa fait partie d'un des ensembles d'aléas que lorsque le précédent aléa n'appartient à aucun des ensembles d'aléas associés aux données biométriques de référence.

11. Système comprenant :
• Un système de gestion (2) selon la revendication précédente, et
• Un dispositif de contrôle (1) comprenant :
• Une interface de communication (12) configurée pour :
• pour toute donnée biométrique de référence contenue dans la base de données (DBB), recevoir une donnée représentative de l'ensemble d'aléas associé à la donnée biométrique de référence, à l'issue d'un enrôlement de la donnée biométrique de référence dans la base de données,
• envoyer la requête au système de gestion (2),
• recevoir la réponse à la requête,
• Une mémoire (14) pour mémoriser les données représentatives reçues par l'interface de communication (12),
• Une unité de traitement (10) configurée pour vérifier l'existence dans la mémoire (14) d'une donnée représentative d'un ensemble d'aléas qui comprend l'aléa contenu dans la réponse.

## Patentansprüche

1. Von einer Verarbeitungseinheit (20) durchgeführtes Verfahren, das folgende Schritte umfasst:
• Empfangen (208) erster biometrischer Daten und einer Anfrage, ob die ersten biometrischen Daten in einer Datenbank (DBB) referenziert sind, wobei die Datenbank (DBB) Referenz-Biometriedaten umfasst, die jeweiligen Zufallsgruppen zugeordnet sind, die disjunkt sind, wobei jede Zufallsgruppe eine Vielzahl von Zufällen umfasst,
• Suchen (210) eines zweiten biometrischen Merkmals, das dem ersten biometrischen Merkmal unter den Referenz-Biometriedaten entspricht,
• Erzeugen (212) einer Antwort auf die Anfrage, wobei die Antwort eine Zufälligkeit enthält, die die folgenden Bedingungen erfüllt:
• wenn die zweite biometrische Angabe bei der Suche gefunden wird, ist der Zufallswert ein Element der Gruppe von Zufallswerten, die der zweiten biometrischen Angabe zugeordnet ist,
• wenn die zweite biometrische Angabe bei der Suche nicht gefunden wird, gehört der Zufallswert zu keiner der Zufallswertmengen, die den Referenz-Biometriedaten zugeordnet sind,
• unterscheidet sich der Zufallswert von einem früheren Zufallswert, der in einer früheren Antwort auf eine frühere Anfrage enthalten war, ob ein früherer biometrischer Datensatz in der biometrischen Datenbank (DBB) referenziert ist, sowohl wenn der frühere Zufallswert ein Element einer der Zufallswertmengen ist, als auch wenn der frühere Zufallswert zu keiner der Zufallswertmengen gehört.

2. Verfahren nach dem vorherigen Anspruch, das die folgenden Schritte umfasst, die für alle biometrischen Referenzdaten bei der Erfassung der biometrischen Referenzdaten in der Datenbank (DBB) durchgeführt werden:
• Erzeugung von Daten (A), die für die mit den biometrischen Referenzdaten verbundenen Zufälligkeiten repräsentativ sind,
• Speichern der erzeugten Daten in der Datenbank (DBB).

3. Verfahren nach Anspruch 2, bei dem für alle biometrischen Referenzdaten die Daten, die für die mit den biometrischen Referenzdaten verbundenen Zufälligkeiten repräsentativ sind, aus den mit den biometrischen Referenzdaten verbundenen Zufälligkeiten bestehen.

4. Verfahren nach einem der Ansprüche 2 und 3, das außerdem den folgenden Schritt umfasst, der für alle biometrischen Referenzdaten nach der Erfassung der biometrischen Referenzdaten durchgeführt wird:
• Anweisen der Übertragung der Daten, die die mit den biometrischen Referenzdaten verbundenen Zufallsgrößen repräsentieren, an ein Kontrollsystem (1).

5. Verfahren nach einem der vorstehenden Ansprüche, bei dem, wenn die zweiten biometrischen Daten bei der Suche nicht gefunden werden, die in der Antwort enthaltene Zufälligkeit nach dem Suchschritt von der Verarbeitungseinheit (20) erzeugt wird.

6. Verfahren zur Identitätskontrolle, das von einem Kontrollsystem (1) durchgeführt wird, das mit einer Verarbeitungseinheit (20) kommuniziert, die so konfiguriert ist, dass sie das Verfahren gemäß einem der vorstehenden Ansprüche durchführt, wobei das Verfahren zur Identitätskontrolle die folgenden Schritte umfasst:
• für alle biometrischen Referenzdaten Empfang von Daten, die für die mit den biometrischen Referenzdaten verbundenen Zufälligkeiten repräsentativ sind, nach der Erfassung der biometrischen Referenzdaten in der Datenbank, und Speicherung der Daten, die für die mit den biometrischen Referenzdaten verbundenen Zufälligkeiten repräsentativ sind, in einem Speicher (14),
• Übertragung der Anfrage an die Verarbeitungseinheit (20), ob die ersten biometrischen Daten in einer Datenbank (DBB) referenziert sind,
• Empfang der Antwort auf die Anfrage,
• Überprüfen, ob im Speicher Daten vorhanden sind, die eine Reihe von Zufälligkeiten repräsentieren, die die in der Antwort enthaltene Zufälligkeit umfassen.

7. Verfahren zur Identitätskontrolle gemäß dem vorhergehenden Anspruch, bei dem:
• sich die Referenz-Biometriedaten auf Referenzpersonen beziehen, die über ein Zugangsrecht zu einem gesicherten Bereich verfügen,
• sich die ersten biometrischen Daten auf eine Person beziehen, die Zugang zum gesicherten Bereich erhalten möchte.

8. Computerprogrammprodukt, das Programmcodeanweisungen zur Ausführung der Schritte des Verfahrens gemäß einem der vorstehenden Ansprüche umfasst, wenn dieses Programm von einer Verarbeitungseinheit (20) ausgeführt wird.

9. Computerlesbarer Speicher (24), der vom Computer ausführbare Befehle zur Durchführung der Verfahrensschritte gemäß einem der Ansprüche 1 bis 7 speichert.

10. System (2) zur Verwaltung biometrischer Daten, umfassend:
• eine Kommunikationsschnittstelle (22), die konfiguriert ist, um:
• Empfangen erster biometrischer Daten und einer Anfrage, ob die biometrischen Daten in einer Datenbank (DBB) referenziert sind, wobei die Datenbank (DBB) Referenz-Biometriedaten umfasst, die jeweiligen Zufallsmengen zugeordnet sind, die disjunkt sind, wobei jede Zufallsmenge eine Vielzahl von Zufällen umfasst,
• eine Antwort auf die Anfrage auszugeben,
• eine Verarbeitungseinheit (20), die konfiguriert ist, um:
• eine zweite biometrische Angabe, die der ersten biometrischen Angabe entspricht, unter den Referenz-biometrischen Angaben zu suchen,
• die Antwort auf die Anfrage zu generieren, wobei die Antwort eine Zufallsgröße enthält, wobei die Zufallsgröße die folgenden Bedingungen erfüllt:
• wenn die zweiten biometrischen Daten bei der Suche gefunden werden, ist der Zufallswert ein Element des Zufallswertsatzes, der den zweiten biometrischen Daten zugeordnet ist,
• wenn die zweite biometrische Angabe bei der Suche nicht gefunden wird, gehört der Zufallswert zu keiner der Zufallswertmengen, die den Referenz-Biometriedaten zugeordnet sind,
• Das Risiko unterscheidet sich von einem früheren Risiko, das in einer früheren Antwort auf eine frühere Anfrage enthalten war, ob ein früherer biometrischer Datensatz in der Datenbank (DBB) referenziert ist, und zwar sowohl dann, wenn der vorherige Zufall Teil einer der Zufallsgruppen ist, als auch dann, wenn der vorherige Zufall zu keiner der Zufallsgruppen gehört, die mit den Referenz-Biometriedaten verbunden sind.

11. System, umfassend:
• ein Verwaltungssystem (2) gemäß dem vorherigen Anspruch und
• Eine Steuervorrichtung (1), die umfasst:
• Eine Kommunikationsschnittstelle (12), die so konfiguriert ist, dass sie
• für alle in der Datenbank (DBB) enthaltenen biometrischen Referenzdaten Daten zu empfangen, die für die mit den biometrischen Referenzdaten verbundene Zufallsgruppe repräsentativ sind, nach der Erfassung der biometrischen Referenzdaten in der Datenbank
• die Anfrage an das Verwaltungssystem (2) zu senden,
• Empfang der Antwort auf die Anfrage,
• einen Speicher (14) zum Speichern der von der Kommunikationsschnittstelle (12) empfangenen repräsentativen Daten,
• Eine Verarbeitungseinheit (10), die so konfiguriert ist, dass sie überprüft, ob im Speicher (14) Daten vorhanden sind, die eine Reihe von Zufallsgrößen repräsentieren, darunter auch die in der Antwort enthaltene Zufallsgröße.

## Claims

1. A method implemented by a processing unit (20), comprising steps of:
• receiving (208) a first biometric datum and a query asking whether the first biometric datum is referenced in a database (DBB), the database (DBB) comprising reference biometric data associated with respective sets of random elements that are disjoint, each set of random elements comprising a plurality of random elements,
• searching (210) for a second biometric datum that corresponds to the first biometric datum among the reference biometric data,
• generating (212) a response to the query, the response containing a random element satisfying the following conditions:
• when the second biometric datum is found in the search, the random element is an element from the set of random elements associated with the second biometric datum,
• when the second biometric datum is not found in the search, the random element does not belong to any of the sets of random elements associated with the reference biometric data,
• the random element is different from a previous random element contained in a previous response to a previous query asking whether a previous biometric datum is referenced in the biometric database (DBB), both when the previous random element is an element from one of the sets of random elements and when the previous random element does not belong to any of the sets of random elements.

2. The method as claimed in the preceding claim, comprising the following steps, implemented for any reference biometric datum, when the reference biometric datum is enrolled in the database (DBB):
• generating a datum (A) representative of the set of random elements associated with the reference biometric datum,
• storing the generated datum in the database (DBB).

3. The method as claimed in claim 2, wherein, for any reference biometric datum, the datum representative of the set of random elements associated with the reference biometric datum consists of the set of random elements associated with the reference biometric datum.

4. The method as claimed in either one of claims 2 and 3, moreover comprising the following step, carried out for any reference biometric datum following the enrollment of the reference biometric datum:
• commanding the transmission of the datum representative of the set of random elements associated with the reference biometric datum to a checking system (1).

5. The method as claimed in any one of the preceding claims, wherein, when the second biometric datum is not found in the search, the random element contained in the response is generated by the processing unit (20) after the searching step.

6. An identity checking method implemented by a checking system (1) communicating with a processing unit (20) configured to implement the method as claimed in any one of the preceding claims, the identity checking method comprising the following steps:
• for any reference biometric datum, receiving a datum representative of the set of random elements associated with the reference biometric datum, following enrollment of the reference biometric datum in the database, and storing the datum representative of the set of random elements associated with the reference biometric datum in a memory (14),
• transmitting the query asking whether the first biometric datum is referenced in a database (DBB) to the processing unit (20),
• receiving the response to the query,
• verifying the existence, in the memory, of a datum representative of a set of random elements that comprises the random element contained in the response.

7. The identity checking method as claimed in the preceding claim, wherein:
• the reference biometric data relate to reference individuals having a right to access a secure area,
• the first biometric datum relates to an individual wishing to access the secure area.

8. A computer program product comprising program code instructions for carrying out the steps of the method as claimed in any one of the preceding claims when this program is executed by a processing unit (20).

9. A computer-readable memory (24) storing instructions able to be executed by the computer in order to carry out the steps of the method according to any one of claims 1 to 7.

10. A biometric data management system (2) comprising:
• A communication interface (22) configured to:
• receive a first biometric datum and a query asking whether the biometric datum is referenced in a database (DBB), the database (DBB) comprising reference biometric data associated with respective sets of random elements that are disjoint, each set of random elements comprising a plurality of random elements,
• send a response to the query,
• a processing unit (20) configured to:
• search for a second biometric datum that corresponds to the first biometric datum among the reference biometric data,
• generate the response to the query, the response containing a random element, wherein the random element satisfies the following conditions:
• when the second biometric datum is found in the search, the random element is an element from the set of random elements associated with the second biometric datum,
• when the second biometric datum is not found in the search, the random element does not belong to any of the sets of random elements associated with the reference biometric data,
• the random element is different from a previous random element contained in a previous response to a previous query asking whether a previous biometric datum is referenced in the database (DBB), both when the previous random element forms part of one of the sets of random elements and when the previous random element does not belong to any of the sets of random elements associated with the reference biometric data.

11. A system comprising:
• A management system (2) as claimed in the preceding claim, and
• A checking device (1) comprising:
• A communication interface (12) configured to:
• for any reference biometric datum contained in the database (DBB), receive a datum representative of the set of random elements associated with the reference biometric datum, following enrollment of the reference biometric datum in the database,
• send the query to the management system (2),
• receive the response to the query,
• A memory (14) for storing the representative data received by the communication interface (12),
• A processing unit (10) configured to verify the existence, in the memory (14), of a datum representative of a set of random elements that comprises the random element contained in the response.
